# EUROPÄISCHE PATENTSCHRIFT

(11) **EP 0 571 718 B1**
(45) Veröffentlichungstag und Bekanntmachung des Hinweises auf die Patenterteilung: **27.09.1995**
(21) Anmeldenummer: 93103378.1
(22) Anmeldetag: 04.03.1993
(51) Int. Cl.: B60R 16/02, B60G 17/015

(54) **Schaltung zum Bereitschaftsbetrieb (Stand-by) einer von mehreren Funktionsgruppen in einem Fahrzeug**
Stand-by circuit for one of several functional groups in a vehicle
Circuit de position d'attente pour l'un de plusieurs groupes fonctionnels d'un véhicule

(30) Priorität: 28.05.1992 DE 4217650
(43) Veröffentlichungstag der Anmeldung: 01.12.1993
(73) Patentinhaber: MERCEDES-BENZ AG, 70327 Stuttgart (DE)
(72) Erfinder: Köster, Rolf, W-7302 Ostfildern (DE)

(56) Entgegenhaltungen:
- EP-A- 0 461 432
- US-A- 4 780 618
- PATENT ABSTRACTS OF JAPAN vol. 011, no. 235 (M-612)1987 & JP-A-62 046 737(HONDA MOTOR CO: LTD)
- PATENT ABSTRACTS OF JAPAN vol. 10, no. 299 (M-524)(2355) 11. Oktober 1986 & JP-A-61 110 646 (OMRON TATEISI ELECTRONICS CO.)

## Beschreibung

Die Erfindung bezieht sich auf eine Schaltung zum Bereitschaftsbetrieb (Stand-By) einer von mehreren Funktionsgruppen in einem Fahrzeug gemäß dem Oberbegriff des Patentanspruchs 1.

Aufgrund der steigenden Anforderungen an die technische Ausstattung von Fahrzeugen, werden verstärkt elektronische Systeme eingesetzt, die nach Funktionsgruppen unterschieden werden können. Für jede Funktionsgruppe wird überwiegend jeweils ein Steuergerät verwendet, welches mittels Sensoren das relevante Umfeld erfaßt und gegebenenfalls durch Aktivierung von Stellgliedern nach vorgegebenen Mustern reagiert, um das Fahrzeug auf das Umfeld anzupassen.

Ein Beispiel für eine Funktionsgruppe ist die Elektronische Niveauregelung (ENR) bei Luftfederfahrzeugen: Mit elektronischen Wegsensoren, die am Rahmen befestigt und mit der Antriebsachse über Gestänge und Hebel verbunden sind, wird permanent die Rahmenhöhe gemessen und von einem elektronischen Steuergerät ausgewertet. Bei jeder Veränderung der Rahmenhöhe aktiviert das Steuergerät Magnetventile an den Fahrzeugachsen, so daß die Luftfederbälge bis zum Erreichen des gewünschten Rahmenniveaus be- oder entlüftet werden. In vorteilhafter Weise ermöglicht die ENR, wie beispielsweise aus der DE 38 10 386 C2 bekannt ist, das Rahmenniveau bei Lastkraftwagen zum Be- und Entladen auf eine Rampenhöhe einzustellen.

Damit trotz des während des Ladevorgangs sich verändernden aufliegenden Gewichtes das Rahmenniveau konstant bleibt, muß von der ENR laufend nachgeregelt werden. Diese Funktion wird auch bei abgestelltem Motor unter Ausnutzung des vorhandenen Druckluftvorrats aufrechterhalten, vorausgesetzt die Zündung bleibt zwecks Spannungsversorgung der Funktionsgruppe eingeschaltet. Der Fahrer kann daher den Zündschlüssel während des Ladevorgangs nicht abziehen und darf das Fahrzeug aus Sicherheitsgründen nicht verlassen, insbesondere dann nicht, wenn das Fahrzeug eine von außen zugängliche Bedieneinheit zur Hebung und Senkung des Rahmenniveaus aufweist. Eine Betätigung der Bedieneinheit durch Unkundige könnte für die am Fahrzeug arbeitenden Personen gefährlich sein. Die Tatsache, daß der Fahrer nicht einfach sein Fahrzeug an der Laderampe abstellen und verlassen kann, wird als nachteilig empfunden.

Aufgabe der Erfindung ist es, die Handhabung zur Aufrechterhaltung bestimmter Funktionsumfänge eines abgestellten Fahrzeuges zu erleichtern und dabei unsichere Betriebszustände zu vermeiden.

Diese Aufgabe wird mit den Merkmalen des Patentanspruchs 1 gelöst. Erfindungsgemäß versorgt eine Schaltung zum Bereitschaftsbetrieb eine bestimmte Funktionsgruppe auch nach Abziehen des Zündschlüssels mit Strom und stimmt diese auf die besonderen Anforderungen des Bereitschaftsbetriebs ab. In vorteilhafter Weise ermöglicht die erfindungsgemäße Schaltung die Einbeziehung von Sicherheitsaspekten, die für das abgestellte Fahrzeug im Bereitschaftsbetrieb relevant sind. Beispielsweise kann durch die Sperrung der Eingriffsmöglichkeit über die Bedieneinheit eine Betätigung durch Unkundige verhindert werden.

Besondere Aus- und Weiterbildungen sind durch die Merkmale der Unteransprüche gekennzeichnet. So wird insbesondere durch das Merkmal von Unteranspruch 4 sichergestellt, daß die Bereitschaftstaste zur Aktivierung des Bereitschaftsbetriebs nur vom Fahrer betätigt wird. Die Merkmale der Unteransprüche 5 und 6 beinhalten die selbsttätige Beendigung des Bereitschaftsbetriebs, so daß der Fahrer nicht zu warten braucht, bis der Bereitschaftsbetrieb nicht mehr benötigt wird, sondern er unmittelbar nach Aktivierung des Bereitschaftsbetriebs das Fahrzeug abschließen und verlassen kann. Das Merkmal von Unteranspruch 6 stellt sicher, daß die Energiereserven des Fahrzeugs insbesondere an Druckluft und Batteriespannung während des Bereitschaftsbetriebs nicht übermäßig erschöpft werden. Eine Schaltung zum Tiefentladeschutz der Starterbatterie eines abgestellten Fahrzeugs ist auch aus der DE 37 42 312 A1 bekannt. Die Schaltung überwacht nach abgezogenem Zündschlüssel laufend die Batteriespannung und trennt bei Unterschreitung eines vorgegebenen Grenzwertes das Bordnetz ab.

Ein Ausführungsbeispiel der Erfindung ist in der Zeichnung dargestellt und wird im folgenden näher beschrieben. Es zeigen:
- Fig. 1:: ein Bordnetz eines Fahrzeugs mit der erfindungsgemäßen Schaltung,
- Fig. 2:: ein Flußdiagramm zur Funktionsweise der Auswertlogik.

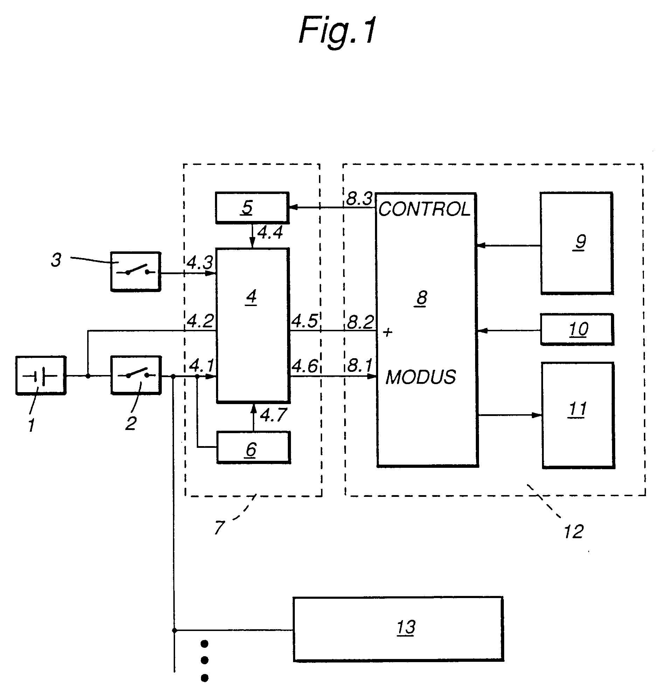

In der **Fig.** 1 ist ausschnittsweise das Bordnetz eines Fahrzeugs dargestellt, welches in bekannter Weise sich aus einer Spannungsversorgung **1**, einem Hauptschalter **2** (z.B. Zündschloßschalter) und mehreren Funktionsgruppen zusammensetzt, wovon nur die Funktionsgruppen **12** und **13** stellvertretend eingezeichnet sind. Die Funktionsgruppe **12** ist weiterhin aufgeteilt in ein Steuergerät **8**, eine Sensorgruppe **9**, eine Bedieneinheit **10** und eine Stellgliedgruppe **11.** Für die oben angesprochene ENR fallen unter die Sensorgruppe **9** beispielsweise Wegsensoren zur Messung des Abstandes Achse zu Rahmen und unter die Stellgliedgruppe **11** Magnetventile, über welche Luftfederbälge zur Niveaueinstellung be- und entlüftet werden. Die Sensorgruppe **9** und die Bedieneinheit **10** informieren das elektronische Steuergerät **8** über den Betriebszustand des Fahrzeugs (z.B. Rahmenniveau) beziehungsweise über die Wünsche des Fahrers (z.B. Heben/Senken). Das Steuergerät **8** betätigt seinerseits Stellglieder (z.B. Magnetventile) aus der Stellgliedgruppe **11**, um beispielweise das Fahrzeug auf das gewünschte Niveau zu heben und zu halten.

Erfindungsgemäß ist zum Bereitschaftsbetrieb, im Zusammenhang mit der Schaltung **7** für das Steuergerät **8** neben dem Versorgungseingang **8.2** ein MODUS-Eingang **8.1** und ein CONTROL-Ausgang **8.3** vorgesehen, wobei alle drei Anschlüsse **8.1 - 8.3** mit der Schaltung **7** verbunden sind. Bei Anliegen eines entsprechenden Steuersignals am MODUS-Eingang **8.1** schaltet das Steuergerät **8** vom Normalbetrieb in den Bereitschaftsbetrieb um und sperrt beispielsweise die Eingriffmöglichkeit über die Bedieneinheit **10**, während die Regelung des voreingestellten Rahmenniveaus aufrechterhalten wird. In einer Weiterbildung kann vorgesehen sein, daß im Bereitschaftsbetrieb das Steuergerät **8** den Druckluftvorrat überwacht und über den CONTROL-Ausgang **8.3** der Schaltung **7** ein entsprechendes Signal übermittelt. Der Druckluftvorrat kann entweder direkt mit einem eigenen Drucksensor gemessen oder unter Einsparung von diesem mittels einer Plausibilitätsabfrage aus der mit den vorhandenen Wegsensoren nachgewiesenen Reaktion auf einen Hebebefehl überwacht werden: Fällt die Reaktion auf einen Hebebefehl schwach aus, dann schließt eine Logik im Steuergerät **8** auf eine Erschöpfung des Druckluftvorrats und gibt ein entsprechendes Signal über den CONTROL-Ausgang **8.3** aus.

Die Schaltung **7** hat die Aufgabe, das Steuergerät **8** und allgemein die gesamte Funktionsgruppe **12** mit Spannung zu versorgen und das Steuersignal am MODUS-Eingang **8.1** bereitzustellen. Eine Auswertlogik **4** in der Schaltung **7** verknüpft verschiedene Informationssignale **4.1, 4.3, 4.4, 4.7** zu einer Entscheidung, in welcher Weise die Funktionsgruppe **12** betrieben werden soll. Die zur Verknüpfung anliegenden Informationssignale setzen sich wie folgt zusammen: Die Informationssignale **4.1** und **4.3** teilen die Stellung (AUS/EIN) des Hauptschalter **2** beziehungsweise der Bereitschaftstaste **3** der Auswertlogik **4** mit. Eine Überwachungseinheit **5** gibt das Informationssignal **4.4** aus, welches darüber informiert, ob der Energievorrat an Druckluft und Batteriespannung ausreicht, wobei die Überwachungseinheit **5** von dem CONTROL-Ausgang **8.3** des Steuergerätes **8** eine Rückmeldung über den vorhandenen Druckluftvorrat erhält. Schließlich gibt ein Zeitgeber **6** mit dem Informationssignal **4.7** die seit dem Ausschalten des Hauptschalters **2** verstrichene Zeit t an.

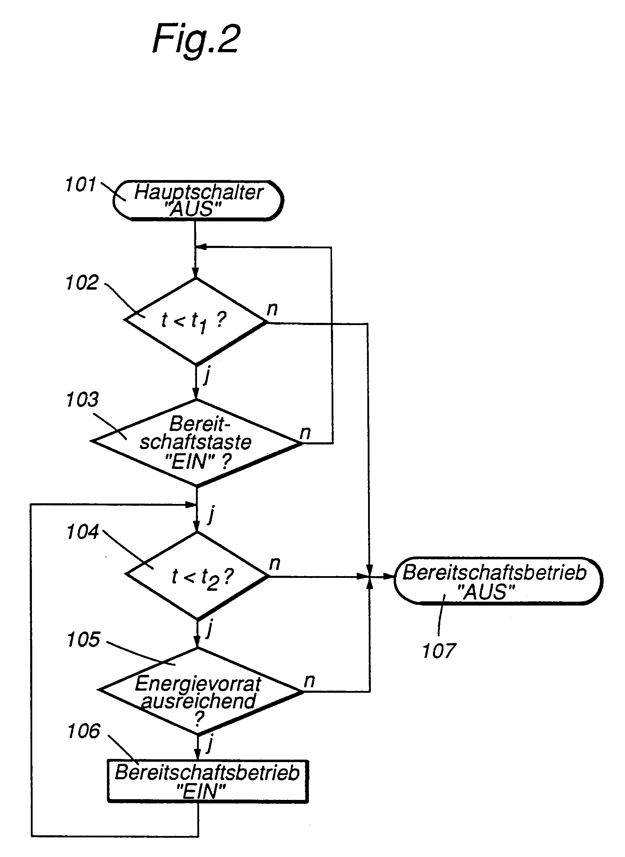

Für den Normalbetrieb (Hauptschalter **2** geschlossen, Stellung "EIN") gibt die Schaltung **7** die am Versorgungseingang **4.2** anliegende Versorgungsspannung über den Ausgang **4.5** direkt an den Versorgungseingang **8.2** des Steuergerätes **8** weiter. Ist der Hauptschalter **2** in der Stellung "AUS", so folgt die Entscheidung, ob das Steuergerät **8** und damit die Funktionsgruppe **12** in den Bereitschaftsbetrieb geschaltet oder abgeschaltet wird, einem Ablauf der dem in der **Fig.** 2 dargestellten Flußdiagramm folgt. Das Flußdiagramm besteht im wesentlichen aus einer Entscheidungskaskade, an deren Ende entweder die Aufrechterhaltung des Bereitschaftsbetriebs (Schritt **106**, Bereitschaftsbetrieb "EIN") oder seine Abschaltung steht (Schritt **107**, Bereitschaftsbetrieb "AUS"). Die Operation Bereitschaftsbetrieb "EIN" beinhaltet, daß am Ausgang **4.5** die Spannung zur Versorgung der Funktionsgruppe **12** über den Versorgungseingang **8.2** und am Ausgang **4.6** das Steuersignal bereitgestellt wird, welches über den MODUS-Eingang **8.1** das Steuergerät **8** in den Bereitschaftsbetrieb schaltet. Die Operation Bereitschaftsbetrieb "AUS" schaltet die Funktionsgruppe **12** ab, indem die Versorgungsspannung am Ausgang **4.5** nicht mehr bereitsteht.

Der Ablauf des Flußdiagramms in **Fig.** 2 beginnt mit dem Ausschalten des Hauptschalters **2** (Schritt **101**). Mit dem Ausschalten wird der Zeitgeber **6** in Gang gesetzt, welcher die seit dem Ausschalten des Hauptschalters **2** verstrichene Zeit t mißt. Die aus einer ersten Zeitabfrage **102**, einer Abfrage **103** nach der Stellung der Bereitschaftstaste **3** und dem anschließenden Rücksprung zur Zeitabfrage **102** gebildete erste Schleife setzt ein Zeitfenster 0<t<t₁, innerhalb dessen die Bereitschaftstaste **3** betätigt werden muß, um den Bereitschaftsbetrieb zu aktivieren. Verstreicht die Zeit t₁, ohne daß die Bereitschaftstaste **3** betätigt wurde, wird der Entscheidungsablauf abgekürzt und unmittelbar die Position **107**, Bereitschaftsbetrieb "AUS", erreicht, worauf die Funktionsgruppe **12** abgeschaltet wird. Die Zeit t₁ ist vorgegeben und beträgt typischerweise wenige Sekunden. Die Abfragen **104, 105** und die Aktivierung des Bereitschaftsbetriebs **106** sowie der Rücksprung zu der Abfrage **104** bilden eine zweite Schleife. Mit dieser zweiten Schleife wird der Bereitschaftsbetrieb aktiviert und solange aufrecht erhalten, wie die beiden durch die Abfragen **104** und **105** gesetzten Bedingungen gleichzeitig erfüllt sind: die Zeitabfrage **104** bedingt, daß die seit dem Ausschalten **101** des Hauptschalters **2** verstrichene Zeit kleiner als eine zweite vorgegebene Zeit t₂ sein muß und die Abfrage **105** bedingt, daß die Überwachungseinheit **5** einen ausreichenden Vorrat an Batteriespannung und Druckluft meldet. Die Zeit t₂ ist auch vorgegeben und typischerweise von der Größenordnung weniger Stunden, also so bemessen, daß in dieser Zeit wie in dem obigen Beispiel der Ladevorgang abgeschlossen werden kann.

Mit der ersten Zeitabfrage **102** wird also sichergestellt, daß der Bereitschaftsbetrieb ausschließlich vom Fahrer betätigt wird, welcher kurz zuvor den Hauptschalter **2** (Zündschloßschalter) betätigt hat; mit der zweiten Zeitabfrage **104** wird sichergestellt, daß nach einer vorgegeben Zeit t₂ der Bereitschaftsbetrieb beendet wird.

Es ist auch eine alternative Ausführungsform denkbar, bei der zur Aktivierung des Bereitschaftsbetriebs der Fahrer zuerst die Bereitschaftstaste **3** und anschließend, innerhalb des vorgebenen Zeitfensters den Hauptschalter **2** betätigen muß. Dazu muß lediglich das Flußdiagramm in **Fig.** 2 dahingehend abgeändert werden, daß in Position **101** die Bereitschaftstaste **2** betätigt wird, womit der Zeitgeber **6** in Gang gesetzt wird, und in Position **103** abgefragt wird, ob der Hauptschalter **2** in Stellung "Aus" steht.

Zur vorzeitigen Beendigung des Bereitschaftsbetriebs muß der Hauptschalter **2** (Zündschloßschalter) ein- und wieder ausgeschaltet werden, ohne daß die Bereitschaftstaste **3** betätigt wird. Damit ist in vorteilhafter Weise sichergestellt, daß der Bereitschaftsbetrieb nur durch den Fahrer beendet werden kann.

In Hinblick auf die Anwendung bei luftgefederten Lastkraftwagen mit ENR ist es weiterhin vorteilhaft, die Bereitschaftstaste **3** in die Bedieneinheit **10** zu integrieren, mit der insofern ein funktioneller Zusammenhang besteht, als die Einstellung der Rahmenhöhe, welche im Bereitschaftsbetrieb auf das eingestellte Niveau gehalten wird, mittels der Bedieneinheit **10** vom Fahrer bewerkstelligt wird.

## Patentansprüche

1. Schaltung zum Bereitschaftsbetrieb (Stand-By) einer von mehreren Funktionsgruppen in einem Fahrzeug, wobei die Funktionsgruppe aus einem Steuergerät, Sensoren und Stellgliedern gebildet ist und die Schaltung bei mittels eines Hauptschalters abgetrennter Spannungsversorgung die Funktionsgruppe für den Bereitschaftsbetrieb mit Spannung versorgt, dadurch gekennzeichnet, daß der Bereitschaftsbetrieb durch den Fahrer des Fahrzeugs aktiviert wird, wobei die Schaltung (7) im Bereitschaftsbetrieb bestimmte Funktionsumfänge des Steuergerätes (8) aktiviert hält und/oder aktiviert, hingegen andere Funktionsumfänge inaktiviert.

2. Schaltung nach Anspruch 1, dadurch gekennzeichnet, daß der Bereitschaftsbetrieb durch Betätigen einer Bereitschaftstaste (3) aktiviert wird.

3. Schaltung nach Anspruch 1, dadurch gekennzeichnet, daß die Schaltung zur Abstimmung der Funktionsumfänge des Steuergerätes (8) auf den Bereitschaftsbetrieb ein Steuersignal an einen MODUS-Eingang (8.1) des Steuergerätes (8) gibt, mit dem vom normalen Betrieb in den Bereitschaftsbetrieb geschaltet wird.

4. Schaltung nach Anspruch 2, dadurch gekennzeichnet, daß zur Aktivierung des Bereitschaftsbetriebs die Bereitschaftstaste (3) innerhalb eines vorbestimmten Zeitfensters, welches den Zeitpunkt des Ausschaltens mittels des Hauptschalters (2) beinhaltet, betätigt werden muß.

5. Schaltung nach Anspruch 2, dadurch gekennzeichnet, daß die Schaltung (7) den Bereitschaftsbetrieb nach einer vorgegebenen Bereitschaftsdauer selbsttätig beendet und die Funktionsgruppe (12) abschaltet, wobei die Bereitschaftsdauer ab dem Zeitpunkt entweder der Betätigung des Bereitschaftsschalters (3) oder des Ausschaltens des Hauptschalters (2) gemessen wird und zur Zeitmessung ein Zeitgeber (6) vorgesehen ist.

6. Schaltung nach Anspruch 1 oder 5, dadurch gekennzeichnet, daß der Bereitschaftsbetrieb selbsttätig beendet wird, wenn die Versorgungsspannung, der Druckluftvorrat oder eine andere Überwachungsgöße einen vorgegebenen kritischen Wert erreichen, wozu eine Überwachungseinheit (5) in der Schaltung laufend von einem CONTROL-Ausgang (8.3) des Steuergerätes (8) zur Überwachung relevante Signale übermittelt bekommt.

7. Schaltung nach Anspruch 2, dadurch gekennzeichnet, daß die Bereitschaftstaste (3) in eine Bedieneinheit (10) integriert ist, welche auch zur Ansteuerung des Steuergerät (8) dient.

8. Schaltung nach Anspruch 1, dadurch gekennzeichnet, daß die Schaltung (7) und das Steuergerät (8) in einen Bauteil integriert sind.

9. Schaltung nach einem der Ansprüche 1 bis 8, dadurch gekennzeichnet, daß die Funktionsgruppe (12) eine elektronische Niveauregulierung bei luftgefederten Fahrzeugen darstellt.

## Claims

1. A circuit for the stand-by mode of one of a plurality of function groups in a vehicle, the function group consisting of a control unit, sensors and positioning members, the circuit supplying voltage to the stand-by mode function group when the current supply is cut off by a main switch, characterised in that the stand-by mode is activated by the driver of the vehicle, the circuit (70, in stand-by mode, maintaining activated and/or activating specific functioning areas of the control unit (8) while on the other hand inactivating other areas of function.

2. A circuit according to claim 1, characterised in that stand-by mode is activated by actuation of a stand-by button (3).

3. A circuit according to claim 1, characterised in that in order to attune the functioning areas of the control unit (8) to stand-by mode, the circuit emits a control signal to a MODE input (8.1) of the control unit (8), with which the operating status is switched from normal operation to stand-by mode.

4. A circuit according to claim 2, characterised in that to activate the stand-by mode, the stand-by button (3) has to be actuated within a predetermined period of time which includes the moment of switch-off by means of the main switch (2).

5. A circuit according to claim 2, characterised in that the circuit (7) automatically terminates the stand-by mode after a predetermined stand-by period and switches off the function group (12), the period of stand-by mode being measured from the point in time either of actuation of the stand-by switch (3) or the time when the main switch (2) is switched off and in that a timing pulse transmitter (6) is provided for time measurement.

6. A circuit according to claim 1 or 5, characterised in that stand-by mode is ended automatically when the supply voltage, the supply of compressed air or another monitored variable reaches a predetermined critical level, for which purpose a monitoring unit (5) in the circuit continuously receives from a CONTROL output (8.3) of the control unit (8) signals relevant to a monitoring function.

7. A circuit according to claim 2, characterised in that the stand-by button (3) is integrated into an operating unit (10) which also serves to control the control unit (8).

8. A circuit according to claim 1, characterised in that the circuit (7) and the control unit (8) are integrated into one component.

9. A circuit according to one of claims 1 to 8, characterised in that the function group (12) represents an electronic level regulating means in the case of vehicles with pneumatic suspension.

## Revendications

1. Circuit pour le fonctionnement de mise en état de disponibilité (stand-by) de l'un de plusieurs groupes fonctionnels dans un véhicule, le groupe fonctionnel étant formé par un appareil de commande, des capteurs et des organes de réglage, et le circuit alimentant en tension le groupe fonctionnel pour le fonctionnement de mise à l'état de disponibilité dans le cas d'une alimentation en tension débranchée au moyen d'un interrupteur principal, caractérisé en ce que le fonctionnement de mise à l'état de disponibilité est déclenché par le conducteur du véhicule, le circuit (7) maintenant activés et/ou activant des ensembles fonctionnels, déterminés lors du fonctionnement de mise à l'état de disponibilité, de l'appareil de commande (8), et désactivant au contraire d'autres ensembles fonctionnels.

2. Circuit selon la revendication 1, caractérisé en ce que le fonctionnement de mise à l'état de disponibilité est déclenché par actionnement d'une touche de mise à l'état de disponibilité (3).

3. Circuit selon la revendication 1, caractérisé en ce que le circuit servant à accorder les ensembles fonctionnels de l'appareil de commande (8) sur le fonctionnement de mise à l'état de disponibilité envoie à une entrée de MODE (8.1) de l'appareil de commande (8), un signal de commande, grâce auquel une commutation est réalisée du fonctionnement normal au fonctionnement de mise à l'état de disponibilité.

4. Circuit selon la revendication 2, caractérisé en ce que pour l'activation du fonctionnement de mise à l'état de disponibilité, la touche de mise à l'état de disponibilité (3) doit être actionnée pendant une plage temporelle prédéterminée, qui inclut l'instant de débranchement, au moyen de l'interrupteur principal (2).

5. Circuit selon la revendication 2, caractérisé en ce que le circuit (7) interrompt automatiquement le fonctionnement de mise à l'état de disponibilité au bout d'une durée prédéterminée de mise à l'état de disponibilité et débranche le groupe fonctionnel (12), la durée de mise à l'état de disponibilité étant mesurée à partir de l'instant de l'actionnement de l'interrupteur de mise à l'état de disponibilité (3) ou de l'ouverture de l'interrupteur principal (2), tandis qu'une minuterie (6) est prévue pour la mesure du temps.

6. Circuit selon la revendication 1 ou 5, caractérisé en ce que le fonctionnement de mise à l'état de disponibilité est interrompu automatiquement lorsque la tension d'alimentation, la réserve d'air comprimé ou une autre grandeur de contrôle atteint une valeur critique prédéterminée, auquel cas à cet effet une unité de contrôle (5) située dans le circuit reçoit en permanence, de la part d'une sortie COMMANDE (8.3) de l'appareil de commande (8), des signaux importants pour le contrôle.

7. Circuit selon la revendication 2, caractérisé en ce que la touche de mise à l'état de disponibilité (3) est intégrée dans une unité de commande (10), qui sert également à commander l'appareil de commande (8).

8. Circuit selon la revendication 1, caractérisé en ce que le circuit (7) et l'appareil de commande (8) sont intégrés dans un composant.

9. Circuit selon l'une des revendications 1 à 8, caractérisé en ce que le groupe fonctionnel (12) représente une unité de régulation électronique de niveau dans des véhicules à suspension pneumatique.
